**Europäisches Patentamt**

**European Patent Office**

**Office européen des brevets**

(19)

(11) Veröffentlichungsnummer: **0 253 125**
**A2**

(12)
# EUROPÄISCHE PATENTANMELDUNG

(21) Anmeldenummer: **87108087.5**

(22) Anmeldetag: **04.06.87**

(51) Int. Cl.⁴: **A01D 43/00** , A01D 34/66

(30) Priorität: **04.06.86 DE 3618825**

(43) Veröffentlichungstag der Anmeldung:
**20.01.88 Patentblatt  88/03**

(84) Benannte Vertragsstaaten:
**AT BE CH DE FR GB IT LI NL**

(71) Anmelder: **KARL MENGELE & SÖHNE**
**Maschinenfabrik und Eisengiesserei GmbH**
**& Co.**
**AugsburgerStrasse 50**
**D-8870 Günzburg(DE)**

(72) Erfinder: **Wistuba, Eberhard**
**Auf der Kohlstatt 46**
**D-8871 Rettenbach(DE)**

(54)  **Mähvorrichtung.**

(57)  Zur Verwirklichung einer geringeren Transportbreite von Mähvorrichtungen an Maishäckslern mit
großer Arbeitsbreite wird vorgeschlagen, die jeweils
äußeren Mähkreisel um die Drehachse eines weiter
innen liegenden Mähkreisels nach innen herumzuschwenken.

EP 0 253 125 A2

FIG.2

## Mähvorrichtung

Die Erfindung betrifft eine Mähvorrichtung an Erntemaschinen für stengeliges Erntegut, insbesondere Maishäckslern, mit wenigstens zwei spitz zulaufenden, einen Durchtrittskanal einschließenden Abteilern und wenigstens einer, im Durchtrittskanal angeordneten Schneidvorrichtung, die aus Mähkreiseln mit Messern und darüber angeordneten Mitnehmerringen gebildet wird.

Eine Vorrichtung dieser Art ist z.B. aus der DE-OS 21 57 088 bekannt, bei der die Pflanzenstengel zwischen zwei Abteilerbalken hindurch auf eine Schneidvorrichtung trifft und zwischen einem Walzenpaar mit an der Walzenunterseite umlaufenden Messern (Mähkreisel mit Mitnehmern) abgeschnitten und gegriffen werden. Für große Arbeitsbreiten wie z.B. für sechs Reihen Mais, entsprechend einer Arbeitsbreite von über vier Meter, ergibt sich jedoch das Problem, daß ein Transport auf öffentlichen Straßen wegen Überbreite unmöglich ist.

Demzufolge liegt der Erfindung die Aufgabe zugrunde, mit baulich einfachen Mitteln eine Mähvorrichtung zu schaffen, deren Arbeitsbreite für Transportzwecke auf einfache Weise reduziert werden kann.

Diese Aufgabe wird dadurch gelöst, daß wenigstens die jeweils äußeren Mähkreisel der Schneidvorrichtung um die Drehachsen eines weiter innen angeordneten Mähkreisels in eine Transportstellung vor der Schneideinrichtung herumschwenkbar ausgebildet sind.

Durch diese schwenkbare Ausführung des äußeren Mähkreisels um die Drehachse eines weiter innen angeordneten Mähkreisels nimmt die Mähvorrichtung für den Transport eine geringere Breite ein. Insbesondere bei der ausgesstaltung nach Anspruch 2 ist durch das fächerartige Zusammenklappen der Randabteiler eine einfache und leicht zu bedienende Umstellung von der größeren Arbeitsbreite in eine schmälere Transportstellung möglich.

Anhand der in der Zeichnung dargestellten Ausführungsform wird die Erfindung beschrieben und näher erläutert. Es zeigen:

    Fig. 1 eine Seitenansicht der Mähvorrichtung;

    Fig. 2 eine Draufsicht auf die rechte Hälfte der Mähvorrichtung gemäß Fig. 1 mit zusätzlicher Querförderschnecke.

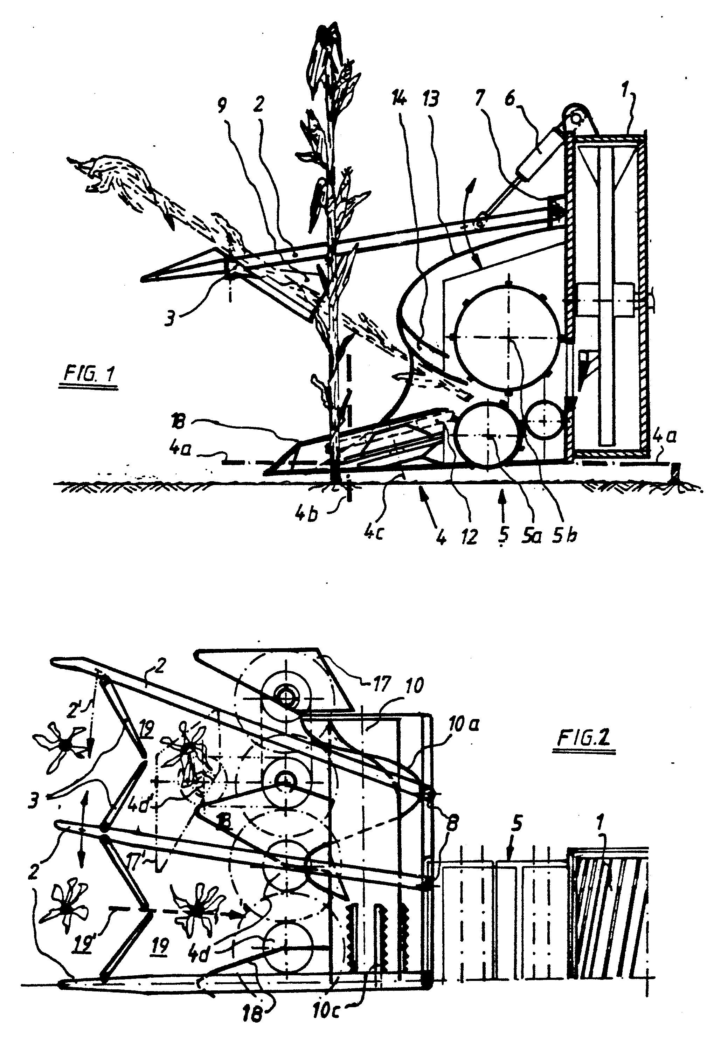

Fig. 1 und 2 zeigen einen schematisch dargestellten Häcksler mit einem Häcksleraggregat 1 in Fig. 1 als Scheibenrad- und in Fig. 2 als Trommelbauart. Diesem sind mehrere Einzugs walzen 5 und ggf. eine Querförderschnecke 10 vorgelagert. Vor der Querförderschnecke 10 mit dem Schneckenblech 10a, Mitnehmerprofilen 10b und mittigen Mitnehmerleisten 10c, ist die Schneidvorrichtung 4 angeordnet, die aus mehreren Mähkreiseln 4d gebildet wird.

Die äußeren Mähkreisel 4d - vgl. Fig. 2 - können zusammen mit ihren Randabteilern 17 in eine - schmälere Transportstellung 4d' bzw. 17' um die Drehachse 4c des inneren Mähkreisels 4d geschwenkt werden. Die inneren Mähkreisel 4 sind mit Mitnehmerringen 12 versehen und teilweise durch Stengelheber 18 abgedeckt.

Über der Schneidvorrichtung 4 können Abteilerstangen 2 mit Rückhaltemittlen 3 angeordnet sein, so daß die Pflanzenstengel entlang dem Pfeil 19' in den Durchtrittskanal 19 eintreten. Sie werden von den Mähkreiseln 4d erfaßt und im Zusammenwirken mit der unteren Leitfläche 14 der Abdeckhaube 13 in eine Schräglage gebracht, wobei der Stengel durch Auflageflächen 9 gestützt werden kann.

Fig. 1 zeigt weiterhin die vordere Schnittebene 4b und die waagrechte Schnittebene 4a der Schneidvorrichtung 4, sowie die mittels eines Hydraulikzylinders 6 um die Achse 7 höhenverstellbaren Abteilerstangen 2, die nach Fig. 2 ebenso wie die Mähkreisel 4d mit den Randabteilern 17 in eine - schmälere Transportstellung 2' um die Achse 8 geschwenkt werden können.

## Ansprüche

1. Mähvorrichtung an Erntemaschinen für stengeliges Erntegut, insbesondere Maishäckslern, mit wenigstens zwei spitz zulaufenden, einen Durchtrittskanal einschließenden Abteilern und wenigstens einer, im Durchtrittskanal angeordneten Schneidvorrichtung, die aus Mähkreiseln mit Messern und darüber angeordneten Mitnehmerringen gebildet wird,

dadurch gekennzeichnet, daß

wenigstens die jeweils äußeren Mähkreisel (4d) der Schneidvorrichtung (4) um die Drehachsen (4c) eines weiter innen angeordneten Mähkreisels (4d) in eine Transportstellung vor der Schneideinrichtung (4) herumschwenkbar ausgebildet sind.

2. Mähvorrichtung nach Anspruch 1, dadurch gekennzeichnet, daß die Randabteiler (17) an den äußeren Mähkreiseln (4d) drehfest befestigt sind.

FIG. 1

FIG. 2